# EUROPEAN PATENT APPLICATION

(11) **EP 4 595 801 A1**
(43) Date of publication of application: **06.08.2025**
(21) Application number: 23885575.3
(22) Date of filing: 24.10.2023
(51) Int. Cl.: A44C 27/00, B21D 39/02, B65H 5/06

(54) **TIN PRODUCT MAKING DEVICE**

(30) Priority: 04.11.2022 JP 2022177199
(71) Applicant: BROTHER KOGYO KABUSHIKI KAISHA, Nagoya-shi, Aichi 467-8561 (JP)
(72) Inventor: KOGA Yuji, Nagoya-shi, Aichi 467-8562 (JP); TAKEUCHI Kenji, Nagoya-shi, Aichi 467-8562 (JP); TSUJISHITA Yoji, Nagoya-shi, Aichi 467-8562 (JP)
(74) Representative: Prüfer & Partner mbB Patentanwälte · Rechtsanwälte
(86) International application number: PCT/JP2023/038282
(87) International publication number: WO 2024/095815

(57) **Abstract**

Provided is a button product making device with which a button product can be automatically made. This button product making device for making a button product comprises: a printing unit that performs printing on a medium to be printed; a conveying unit that conveys the medium to be printed to an upper side of the button product; and a positioning unit that positions the medium to be printed with respect to the button product.

## Description

### TECHNICAL FIELD

The present invention relates to a button product manufacturing device.

### BACKGROUND

In a related art, a device for manufacturing a button product such as a button badge to which a predetermined image is applied is known, and Patent Literature 1 discloses a button product manufacturing device that manufactures a button badge by caulking a front lid to a back lid.

### Citation List

### Patent Literature

[JP0003] Patent Literature 1: JP2019-136210A

### SUMMARY

### Technical Problem

In the related art described above, there is a problem in that a user himself/herself needs to place a transparent film on a film placement surface of a lower die, the transparent film being used for caulking together with the front lid against the rear lid supported by the lower die.

Therefore, an object of the present invention is to provide a button product manufacturing device capable of automatically manufacturing a button product.

### Solution to Problem

A button product manufacturing device according to the present invention is a device for manufacturing a button product, the device including: a printing unit configured to perform printing on a printing medium; a conveying unit configured to convey the printing medium to above the button product; and a positioning portion configured to position the printing medium with respect to the button product.

### Advantageous Effects Of Invention

According to the present invention, it is possible to provide a button product manufacturing device capable of automatically manufacturing a button product.

### BRIEF DESCRIPTION OF THE DRAWINGS

FIG. 1 is a perspective view illustrating a button product manufacturing device according to the present embodiment.
FIG. 2 is a top view of the button product manufacturing device in FIG. 1.
FIG. 3 is a block diagram illustrating a configuration of a control system of the button product manufacturing device in FIG. 1.
FIG. 4A is a top view of a printing medium.
FIG. 4B is a top view of a white film.

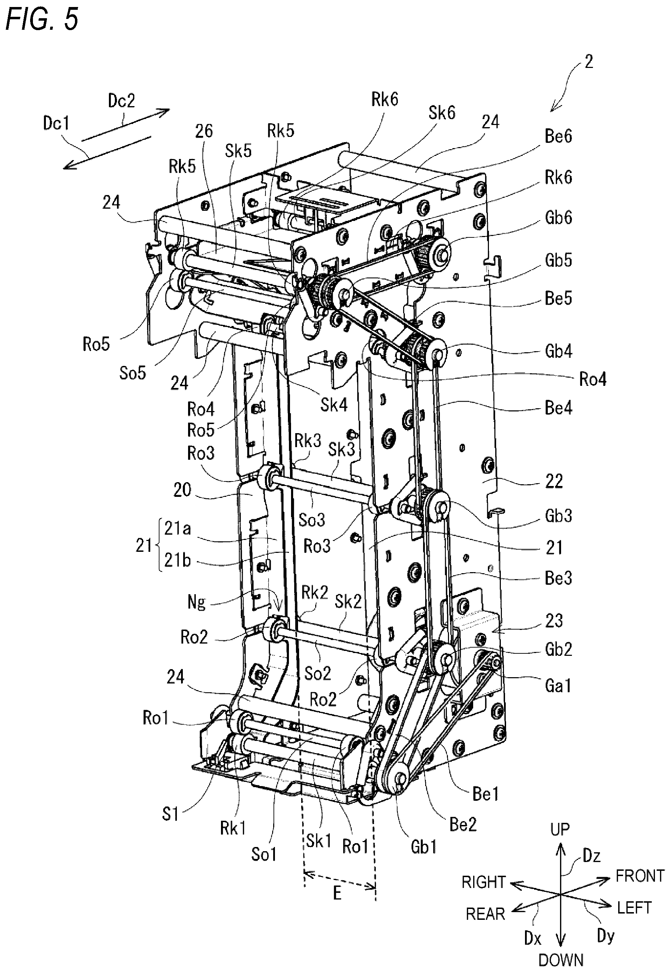

FIG. 5 is a perspective view illustrating a conveying unit.
FIG. 6 is a sectional view of the conveying unit in FIG. 5.
FIG. 7A is a sectional view of a lower plate and an upper plate.
FIG. 7B is a sectional view of a first lower die, the lower plate, and the upper plate.
FIG. 8 is a plan view illustrating the lower plate and the upper plate provided on a lower die.
FIG. 9 is a perspective view illustrating a part of a pressing unit.
FIG. 10A is a perspective view of a front member and a back member.
FIG. 10B is a sectional view of a button product produced by connecting the front member and the back member in FIG. 10A.
FIG. 11A is a sectional view of an upper die and the first lower die for illustrating a caulking step of the front member and the back member.
FIG. 11B is a sectional view of the upper die and the first lower die for illustrating the caulking step of the front member and the back member.
FIG. 12A is a sectional view of the upper die and a second lower die for illustrating the caulking step of the front member and the back member.
FIG. 12B is a sectional view of the upper die and the second lower die for illustrating the caulking step of the front member and the back member.
FIG. 13 is a flowchart illustrating a flow of processing by the button product manufacturing device.

### DETAILED DESCRIPTION

Hereinafter, a button product manufacturing device according to an embodiment of the present invention will be described with reference to the drawings. The button product manufacturing device to be described below is merely an embodiment of the present invention. Accordingly, the present invention is not limited to the following embodiment, and can be added, deleted, or modified without departing from the scope of the present invention.

### Overall Configuration

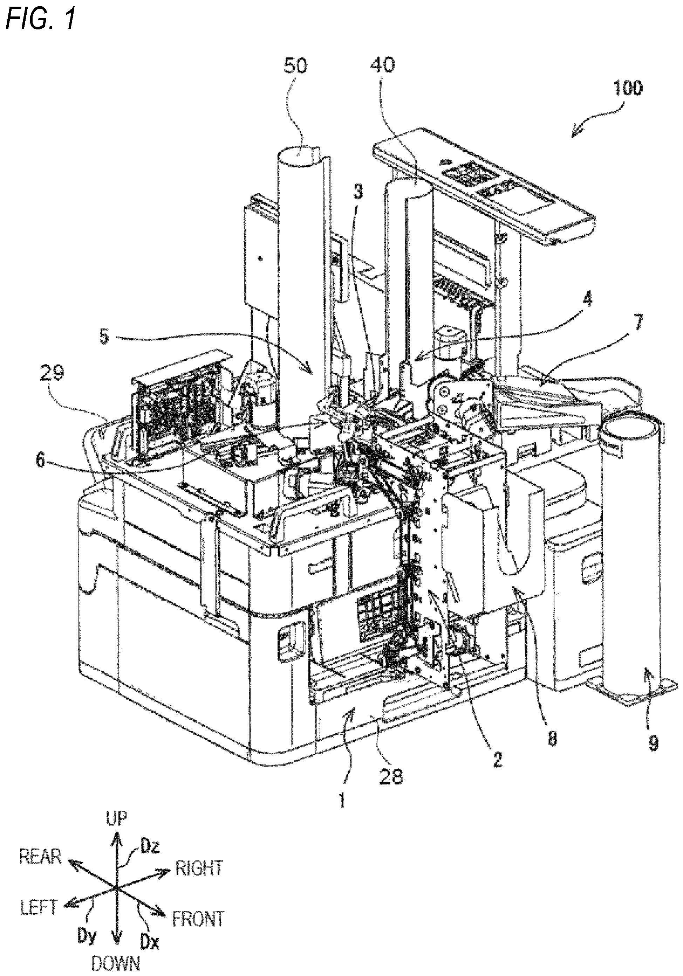

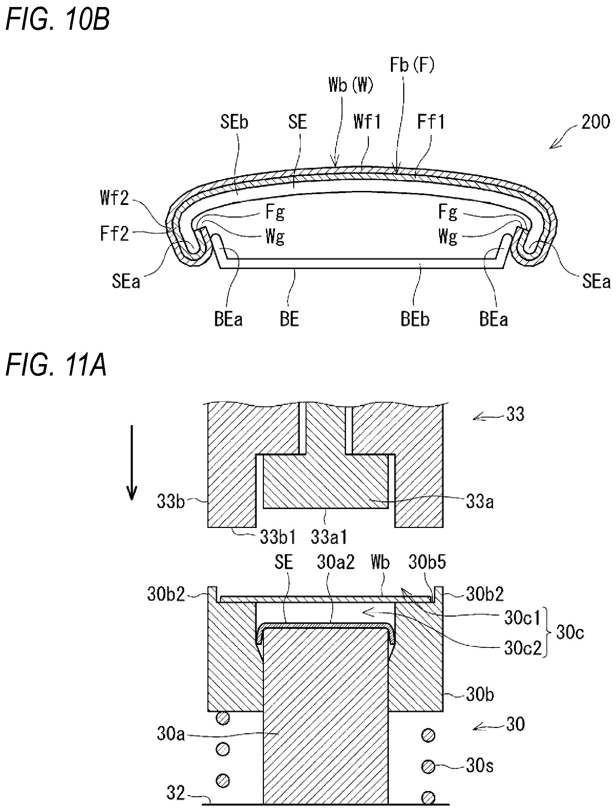

A button product manufacturing device 100 according to an embodiment of the present invention is a device for manufacturing a button product 200 by connecting a front member SE in which a white film F and a printing medium W are laminated and a back member BE as illustrated in the example of FIG. 10B. The button product manufacturing device 100 includes a printing unit 1, a conveying unit 2, a die unit 3, a front member feed unit 4, a back member feed unit 5, a pressing unit 6, a take-out unit 7, a collection box 8, and a button product container 9, as illustrated in the example of FIG. 1. The printing medium W, the white film F, the button product 200, and each part of the button product manufacturing device 100 will be described later. As illustrated in the example of FIG. 1, directions orthogonal to one another are referred to as a front-rear direction Dx, a left-right direction Dy, and an up-down direction Dz, but an arrangement direction of the button product manufacturing device 100 is not limited thereto.

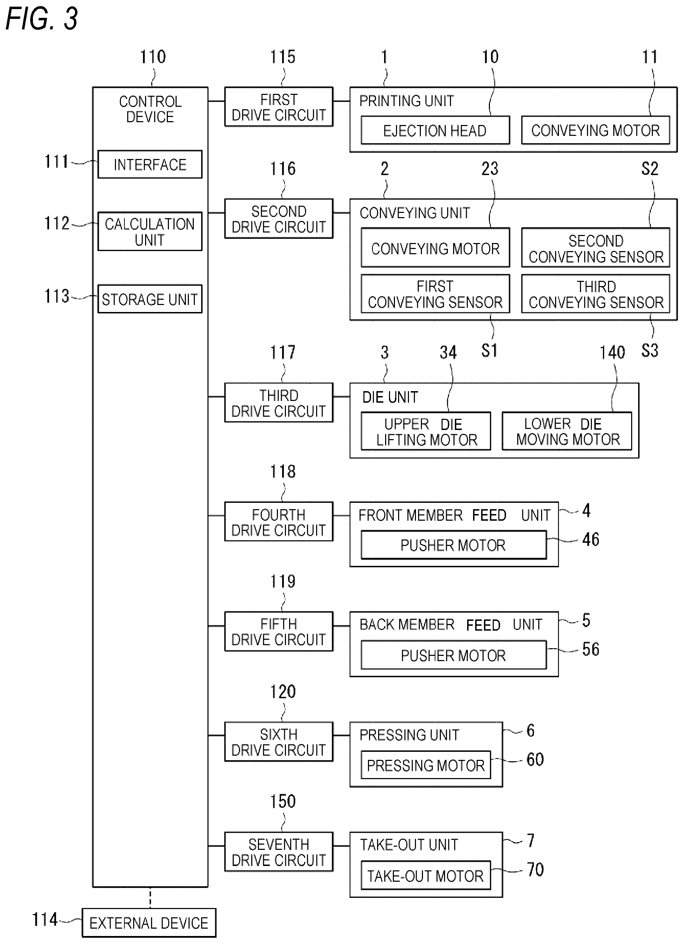

The button product manufacturing device 100 further includes a control device 110, as illustrated in the example of FIG. 3. The control device 110 includes an interface 111, a calculation unit 112, and a storage unit 113. The interface 111 receives various data such as image data from an external device 114 such as a computer, a camera, a communication network, a recording medium, a display, and a printer. The control device 110 may be implemented by a single device, or may have a configuration in which a plurality of devices are arranged in a distributed manner and cooperate with each other to operate the button product manufacturing device 100.

The storage unit 113 is a memory accessible from the calculation unit 112 and includes a RAM and a ROM. The RAM temporarily stores various data including data received from the external device 114 such as image data, data converted by the calculation unit 112, and the like. The ROM stores a button product manufacturing program for performing various processes, predetermined data, and the like. The button product manufacturing program may be stored in an external storage medium different from the storage unit 113 and accessible from the calculation unit 112, such as a CD-ROM.

The calculation unit 112 includes at least one circuit, for example, a processor such as a CPU, and an integrated circuit such as an ASIC. The calculation unit 112 executes the button product manufacturing program stored in the storage unit 113 or the like to control each part of the button product manufacturing device 100.

The control device 110 is connected, via a first drive circuit 115, to an ejection head 10 and a conveying motor 11 provided in the printing unit 1. The first drive circuit 115 causes the ejection head 10 to eject ink droplets and causes the conveying motor 11 to convey the printing medium W in a predetermined direction based on a control signal of the control device 110. In this way, the first drive circuit 115 alternately or simultaneously performs an ejection operation and a conveying operation, so that an image based on the image data is printed on the printing medium W.

The control device 110 is connected, via a fourth drive circuit 118, to a pusher motor 46 provided in the front member feed unit 4. The fourth drive circuit 118 drives the pusher motor 46 based on the control signal of the control device 110 to feed the front member SE to the die unit 3.

The control device 110 is connected, via a second drive circuit 116, to a conveying motor 23 provided in the conveying unit 2. The second drive circuit 116 drives the conveying motor 23 based on detection results of a first conveying sensor S1, a second conveying sensor S2, and a third conveying sensor S3 and the control signal of the control device 110. Accordingly, the printing medium W printed by the printing unit 1 and the white film F are conveyed to above a front surface of the front member SE fed by the front member feed unit 4.

The control device 110 is connected, via a sixth drive circuit 120, to a pressing motor 60 provided in the pressing unit 6. The sixth drive circuit 120 drives the pressing motor 60 based on the control signal of the control device 110. Accordingly, the printing medium W or the white film F conveyed by the conveying unit 2 is pressed against the front member SE.

The control device 110 is connected, via a fifth drive circuit 119, to a pusher motor 56 provided in the back member feed unit 5. The fifth drive circuit 119 drives the pusher motor 56 based on the control signal of the control device 110 to feed the back member BE to the die unit 3.

The control device 110 is connected, via a third drive circuit 117, to an upper die lifting motor 34 and a lower die moving motor 140 provided in the die unit 3. The third drive circuit 117 drives the upper die lifting motor 34 and the lower die moving motor 140 based on the control signal of the control device 110. Accordingly, the button product 200 is produced by deforming the front member SE, the back member BE, or both the front member SE and the back member BE such that a part of the printing medium W is clamped between a back surface of the front member SE and the back member BE fed by the back member feed unit 5, in a state where the front surface of the front member SE is covered with the printing medium W.

The control device 110 is connected, via a seventh drive circuit 150, to a take-out motor 70 provided in the take-out unit 7. The take-out motor 70 drives the take-out motor 70 based on the control signal of the control device 110 to take out, from the die unit 3, the button product 200 manufactured by the die unit 3.

### Button Product

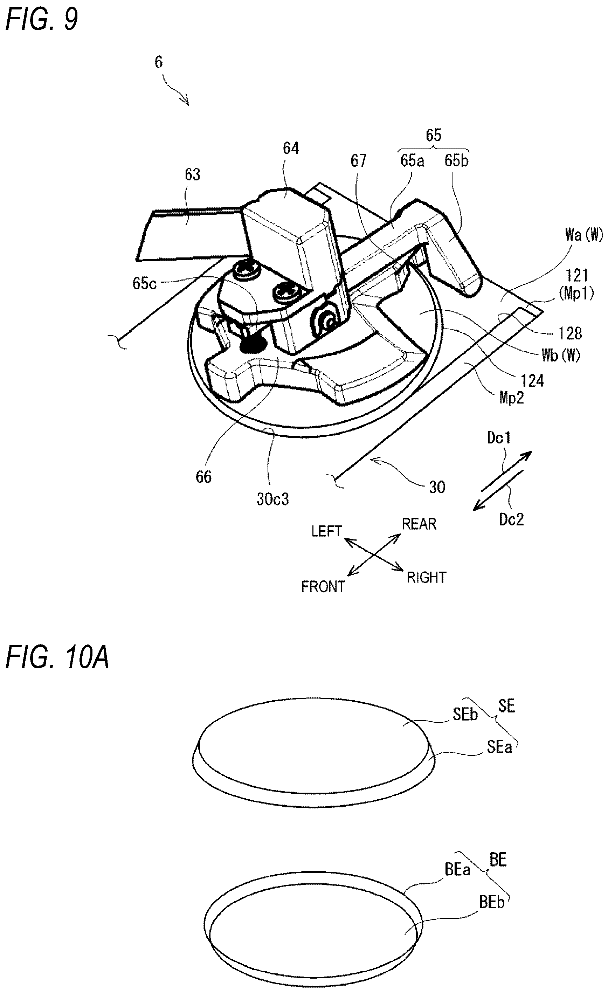

The button product 200 is, for example, a button badge, and is produced by the front member SE, the back member BE, the white film F, and the printing medium W, as illustrated in the example of FIG. 10B. The front member SE and the back member BE are formed of a magnetic material such as a tin-plated steel plate, as illustrated in the example of FIG. 10A. The front member SE and the back member BE each have a circular shape in a plan view. The front member SE has a circular front surface portion SEb and an annular peripheral edge portion SEa protruding downward from an outer peripheral edge of the front surface portion SEb. The back member BE has a circular back surface portion BEb and an annular peripheral edge portion BEa protruding upward from an outer peripheral edge of the back surface portion BEb.

As illustrated in the example of FIG. 10B, a cover portion Fb of the white film F is disposed on the front surface of the front member SE, and a cover portion Wb of the printing medium W is disposed on the white film F. Of the cover portions Wb and Fb, a portion protruding from a front surface of the front surface portion SEb is bent downward from the outer peripheral edge of the front surface portion SEb to cover a front surface of the peripheral edge portion SEa, and a portion protruding from the front surface of the peripheral edge portion SEa is bent upward from a lower end of the peripheral edge portion SEa to be clamped between a back surface of the peripheral edge portion SEa and the peripheral edge portion BEa of the back member BE. Then, the button product 200 is formed by deforming (for example, caulking) at least one of the front member SE and the back member BE in a state where the cover portions Wb and Fb are clamped between the peripheral edge portion SEa and the peripheral edge portion BEa of the back member BE facing each other. The front member SE may be covered with only the printing medium W without using the white film F in the button product 200.

### Printing Medium

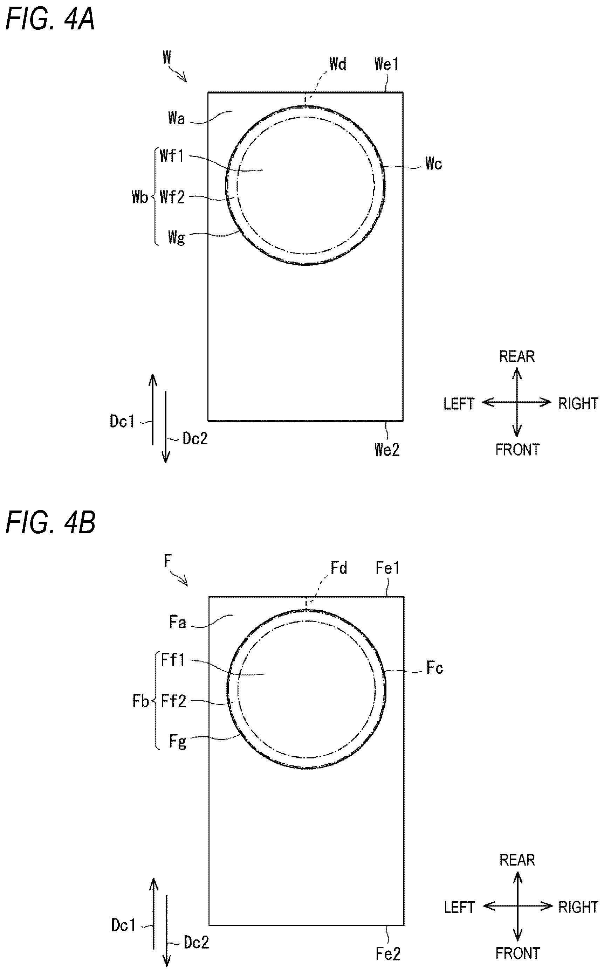

The printing medium W is a rectangular transparent sheet, as illustrated in the example of FIG. 4A. The printing medium W has a trailing end We1 which is a downstream end in a first conveying direction Dc1 when being conveyed toward the die unit 3 by the conveying unit 2, and a leading end We2 which is an upstream end in the first conveying direction Dc1. The printing medium W includes the cover portion Wb covering the front member SE, a remaining portion Wa different from the cover portion Wb, and a coupling portion Wc coupling the cover portion Wb and the remaining portion Wa.

The cover portion Wb has, for example, a circular shape in a plan view, and is unevenly distributed closer to the trailing end We1 than to the leading end We2 in the printing medium W. The cover portion Wb is equal to or larger than the cover portion Fb of the white film F. The cover portion Wb has a first front portion Wf1 covering the front surface of the front surface portion SEb of the front member SE, a second front portion Wf2 covering the front surface of the peripheral edge portion SEa, and a clamped portion Wg clamped between the back surface of the peripheral edge portion SEa and the peripheral edge portion BEa of the back member BE.

The remaining portion Wa includes a linear weak portion Wd that surrounds the cover portion Wb and extends in the front-rear direction from the cover portion Wb to the trailing end We1. The coupling portion Wc and the linear weak portion Wd are weak portions having lower strength than the cover portion Wb and the remaining portion Wa, such as perforations. The coupling portion Wc and the linear weak portion Wd are cut by the cover portion Wb being pressed by the pressing unit 6 in the die unit 3 and the remaining portion Wa being conveyed in a second conveying direction Dc2 by the conveying unit 2 in a state where the cover portion Wb is pressed by the pressing unit 6, so that the cover portion Wb and the remaining portion Wa are separated.

### White Film

The configuration of the white film F is basically the same as the configuration of the printing medium W. The white film F has the same size as the printing medium W and has a rectangular shape, as illustrated in the example of FIG. 4B. The white film F has a trailing end Fe1, a leading end Fe2, a cover portion Fb, a remaining portion Fa, a coupling portion Fc, and a linear weak portion Fd. The trailing end Fe1 corresponds to the trailing end We1, the leading end Fe2 corresponds to the leading end We2, the cover portion Fb corresponds to the cover portion Wb, the remaining portion Fa corresponds to the remaining portion Wa, the coupling portion Fc corresponds to the coupling portion Wc, and the linear weak portion Fd corresponds to the linear weak portion Wd. A first front portion Ff1, a second front portion Ff2, and a clamped portion Fg of the cover portion Fb are the same as the first front portion Wf1, the second front portion Wf2, and the clamped portion Wg of the cover portion Wb, respectively. A color of the white film is not limited to white.

### Printing Unit

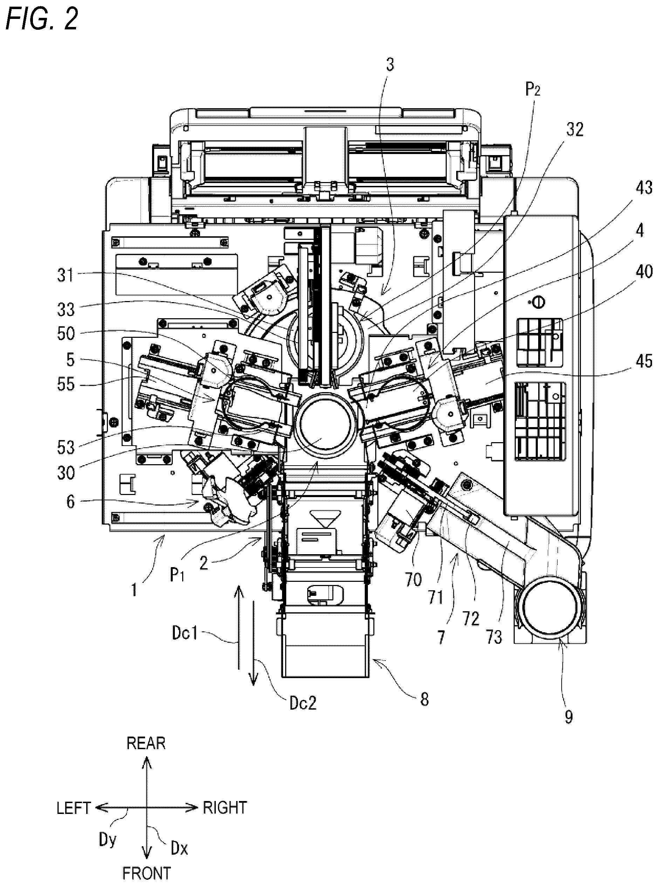

The printing unit 1 is disposed below the die unit 3, the front member feed unit 4, the back member feed unit 5, the pressing unit 6, and the take-out unit 7, as illustrated in the examples of FIGS. 1 and 2. The printing unit 1 is, for example, an inkjet printer that prints an image on the printing medium W. The printing unit 1 includes the ejection head 10 and the conveying motor 11, as illustrated in the example of FIG. 3. An image is printed on the printing medium W by ink droplets being ejected from the ejection head 10 onto the printing medium W and the printing medium W being conveyed by the conveying motor 11. The ejection head 10 may be of a serial head type or a line head type. In the present embodiment, an example in which the printing unit 1 is an inkjet printer has been described, but without being limited thereto, the printing unit 1 may be another printer such as a laser printer or a thermal printer.

The printing unit 1 further includes a first sheet holder 28 that holds the printing medium W, and a second sheet holder 29 that is different from the first sheet holder 28 and holds the white film F, as illustrated in the example of FIG. 1. In this case, the white film F from the second sheet holder 29 is fed to the conveying unit 2 without being printed by the printing unit 1, and the printing medium W from the first sheet holder 28 is fed to the conveying unit 2 after a predetermined image is printed by the ejection head 10 of the printing unit 1. The predetermined image is an image inverted to be a normal image when a user views the image from a surface opposite to a surface on which the image is printed among the surfaces of the printing medium W. The printing unit 1 may include a sheet holder that holds a plurality of printing media W and a plurality of white films F, and the printing media W and the white films F may be held on the sheet holder as a bundle in which the printing media W and the white films F are alternately stacked, and may be alternately conveyed.

### Front Member Feed Unit

The front member feed unit 4 feds the front member SE to a first lower die 30 provided in the die unit 3, as illustrated in the examples of FIGS. 1 and 2. The front member feed unit 4 is disposed above the printing unit 1 and to the right of the die unit 3. The front member feed unit 4 includes a front member stocker 40, a front member slope 43, a pusher 45, and the pusher motor 46 (FIG. 3). The front member stocker 40 has a cylindrical shape, and accommodates a plurality of front members SE having, for example, a circular shape in a plan view in a state of being stacked in the up-down direction Dz. The front member slope 43 extends from a position below the front member stocker 40 to the first lower die 30 disposed at a first die position P1.

The pusher 45 is connected to the pusher motor 46 via a rack gear, and reciprocates along the front member slope 43 in a space between a lower end of the front member stocker 40 and an upper surface of the front member slope 43 by rotational drive of the pusher motor 46. The pusher 45 moves in a direction approaching the first lower die 30 to push the front member SE on the front member slope 43 in the space toward the first lower die 30. On the other hand, the pusher 45 retreats from the space below the front member stocker 40 in a direction away from the first lower die 30, so that one front member SE is fed from the front member stocker 40 onto the front member slope 43.

### Back Member Feed Unit

The back member feed unit 5 feds the back member BE to a second lower die 31 provided in the die unit 3. The back member feed unit 5 is disposed above the printing unit 1 and to the left of the die unit 3. The back member feed unit 5 includes a back member stocker 50, a back member slope 53, a pusher 55, and a pusher motor 56 (FIG. 3). The back member stocker 50 has a cylindrical shape, and accommodates a plurality of back members BE having, for example, a circular shape in a plan view in a state of being stacked in the up-down direction Dz. The back member slope 53 extends from a position below the back member stocker 50 to the second lower die 31 disposed at the first die position P1.

The pusher 55 is connected to the pusher motor 56 via a rack gear, and reciprocates along the back member slope 53 in a space between a lower end of the back member stocker 50 and an upper surface of the back member slope 53 by rotational drive of the pusher motor 56. The pusher 55 moves in a direction approaching the second lower die 31 to push the back member BE on the back member slope 53 in the space toward the second lower die 31. On the other hand, the pusher 55 retreats from the space below the back member stocker 50 in a direction away from the second lower die 31, so that one back member BE is fed from the back member stocker 50 onto the back member slope 53.

### Conveying Unit

Regarding the conveying unit 2, a part of the conveying unit 2 is disposed in front of the printing unit 1, and the entire conveying unit 2 is disposed in front of the die unit 3. The conveying unit 2 conveys the printing medium W and the white film F conveyed from the printing unit 1 onto the front member SE, which is fed prior to the first lower die 30, along the first conveying direction Dc1 toward the die unit 3. The conveying unit 2 conveys the remaining portion Wa of the printing medium W and the remaining portion Fa of the white film F, which are separated at the die unit 3, to the collection box 8 along the second conveying direction Dc2, and the remaining portions Wa and Fa are collected in the collection box 8 as waste portions. In the present embodiment, the white film F is conveyed prior to the printing medium W such that the white film F is placed on the front member SE, which is held by the first lower die 30, prior to the printing medium W. Since a conveying method of the printing medium W by the conveying unit 2 is the same as a conveying method of the white film F, the conveyance of the printing medium W will be representatively described below.

Specifically, the conveying unit 2 further includes the conveying motor 23 and drive rollers Rk1 to Rk6. The drive rollers Rk1 to Rk6 include the drive rollers Rk1 to Rk6 on the right side and the drive rollers Rk1 to Rk6 on the left side, which are provided on drive shafts Sk1 to Sk6. The drive shafts Sk1 to Sk6 are shafts extending in the left-right direction, and the drive rollers Rk1 to Rk6 are rotatably supported by the support plates 20 and 22 spaced apart from each other in the left-right direction. A drive gear Ga1 is connected to a rotary shaft of the conveying motor 23, and drive gears Gb1 to Gb6 are connected to the drive shafts Sk1 to Sk6. The drive gear Ga1 and the drive gears Gb1 to Gb6 are stretched around drive belts Be1 to Be6. Accordingly, the drive rollers Rk1 to Rk6 normally rotate, and the printing medium W is conveyed in the first conveying direction Dc1. On the other hand, the drive rollers Rk1 to Rk6 reversely rotate, and the printing medium W is conveyed in the second conveying direction Dc2.

The conveying unit 2 further includes driven rollers Ro1 to Ro6. The driven rollers Ro1 to Ro6 face the drive rollers Rk1 to Rk6, and the printing medium W is clamped and conveyed between the drive rollers Rk1 to Rk6 and the driven rollers Ro1 to Ro6 facing each other. The driven rollers Ro1 to Ro6 include the driven rollers Ro1 to Ro6 on the right side and the driven rollers Ro1 to Ro6 on the left side, which are provided on driven shafts So1 to So6. The driven shafts So1 to So6 are shafts extending in the left-right direction, and the driven rollers Ro1 to Ro6 are rotatably supported by the support plates 20 and 22.

The conveying unit 2 further includes conveying guides 21 and 25 to 27 that guide the printing medium W. The first conveying guide 21 includes the first conveying guide 21 on the right side protruding leftward from the support plate 20 on the right side and the first conveying guide 21 on the left side protruding rightward from the support plate 22 on the left side. The first conveying guide 21 includes a first piece 21a and a second piece 21b. The printing medium W is clamped between the drive rollers Rk1 to Rk6 and the driven rollers Ro1 to Ro6 and moves in a space among the first piece 21a, the second piece 21b, and the conveying guides 25 to 27. Here, the printing medium W is conveyed from the printing unit 1 to the die unit 3 by the drive rollers Rk1 to Rk5 and the driven rollers Ro1 to Ro5, and the printing medium W is conveyed from the die unit 3 to the collection box 8 by the drive rollers Rk5 to Rk6 and the driven rollers Ro5 to Ro6.

### Pressing Unit

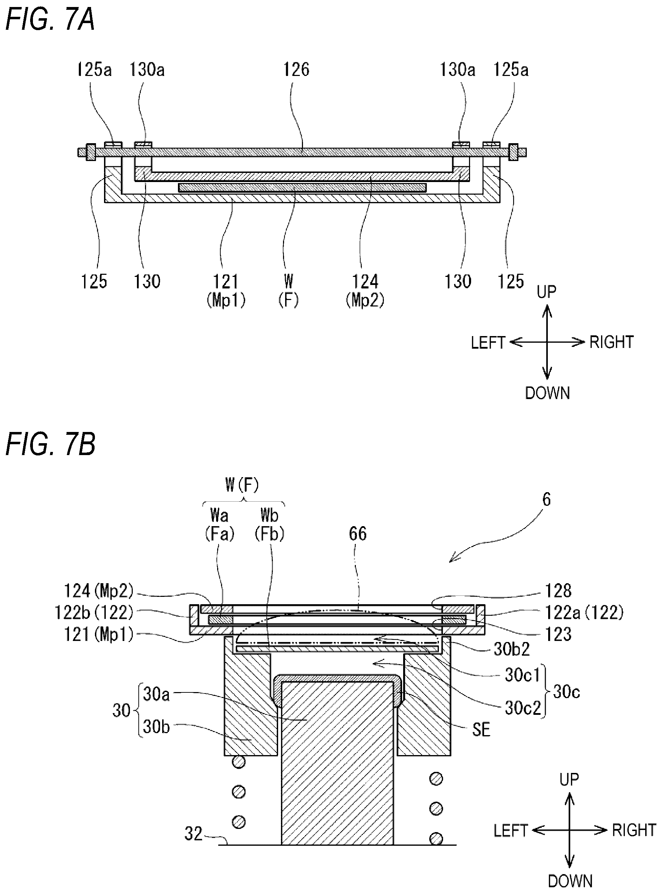

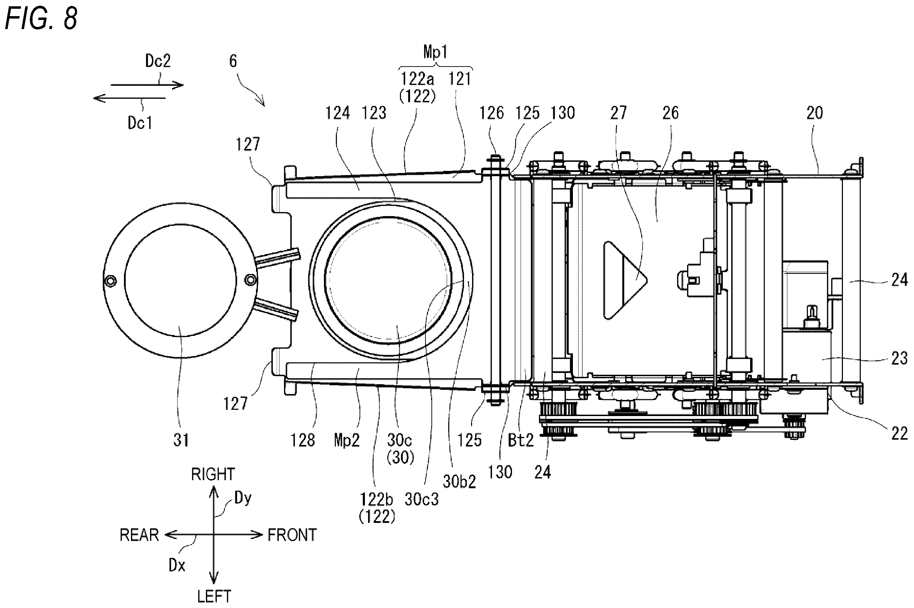

The pressing unit 6 includes a lower plate Mp1 disposed above the first lower die 30 and an upper plate Mp2 disposed on the lower plate Mp1, as illustrated in the examples of FIGS. 7B and 8. The pressing unit 6 further includes a positioning portion that positions the printing medium W with respect to the button product such as the front surface portion SEb. Since in the pressing unit 6, the white film F is also positioned similarly to the printing medium W, the printing medium W will be representatively described below.

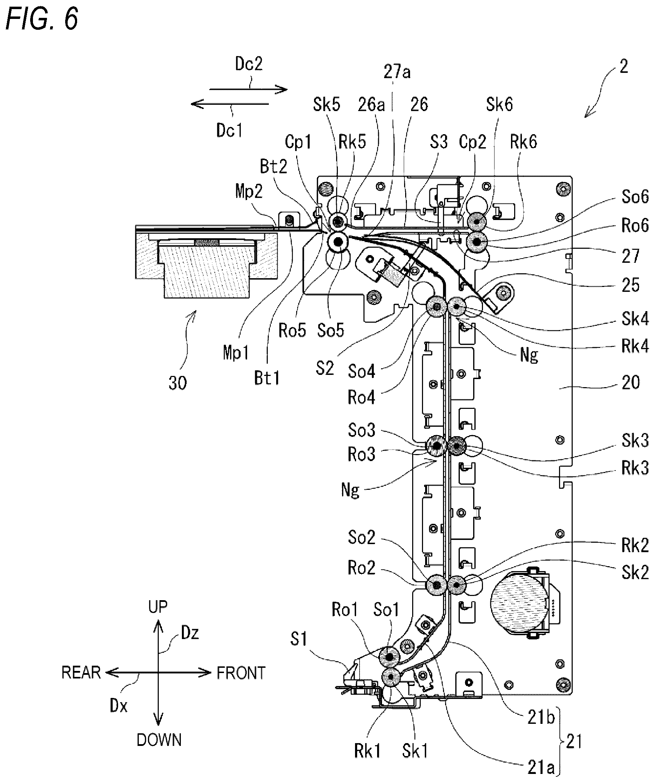

The lower plate Mp1 has a lower plate body 121 having a substantially rectangular plate shape, as illustrated in the example of FIG. 6. A guide portion Bt1 bent downward toward the front is provided at a front end of the lower plate body 121. The upper plate Mp2 has an upper plate body 124 having a substantially U-shaped plate shape cut out forward from a rear end thereof. A guide portion Bt2 bent upward toward the front is provided at a front end of the upper plate Mp2. An interval between the guide portion Bt1 and the guide portion Bt2 increases toward the conveying unit 2 in front of the guide portions, and the guide portion Bt1 and the guide portion Bt2 face the fifth drive roller Rk5 and the fifth driven roller Ro5 of the conveying unit 2. Therefore, the printing medium W is smoothly conveyed to between the lower plate Mp1 and the upper plate Mp2 from the rollers Rk5 and Ro5, and is conveyed rearward between an upper surface of the lower plate Mp1 and a lower surface of the upper plate Mp2. In this way, since the printing medium W is clamped between the lower plate Mp1 and the upper plate Mp2, the lower plate Mp1 and the upper plate Mp2 are used as a positioning portion of the printing medium W in the up-down direction. That is, the positioning portion includes the lower plate Mp1 that supports the printing medium W and the upper plate Mp2 configured to contact with the printing medium W.

A push-up portion 127 is provided as the positioning portion in each of left and right portions at a rear end of the lower plate body 121. The push-up portion 127 extends rearward from the rear end of the lower plate body 121 and is obliquely curved upward toward the rear. As will be described later, when the first lower die 30 and the second lower die 31 are rotated, the push-up portion 127 is pushed up by abutting against the first lower die 30 or the second lower die 31. Accordingly, the lower plate Mp1 connected to the push-up portion 127 smoothly rides on the lower dies 30 and 31, and the lower plate Mp1 is positioned in the up-down direction with respect to the lower dies 30 and 31. Therefore, the printing medium W conveyed between the lower plate Mp1 and the upper plate Mp2 is positioned with respect to the front surface portion SEb supported by the first lower die 30, and the button product can be automatically manufactured.

The lower plate body 121 is provided with a first bearing wall 125, as illustrated in the examples of FIGS. 7A and 8. The first bearing wall 125 is closer to a front end of the lower plate body 121 than the rear end thereof and extends upward from each of a left end and a right end of the lower plate body 121. The first bearing wall 125 is provided with a first bearing hole 125a, and the first bearing hole 125a penetrates the first bearing wall 125 in the left-right direction.

The upper plate body 124 is provided with a second bearing wall 130. The second bearing wall 130 is closer to a front end of the upper plate body 124 than a rear end thereof and extends upward from each of a left end and a right end of the upper plate body 124. The second bearing wall 130 on the right side and the second bearing wall 130 on the left side are disposed between the first bearing wall 125 on the right side and the first bearing wall 125 on the left side. The second bearing wall 130 is provided with a second bearing hole 130a, and the second bearing hole 130a penetrates the second bearing wall 130 in the left-right direction.

A plate support shaft 126 extending in the left-right direction is inserted through the first bearing hole 125a and the second bearing hole 130a. Each of the first bearing hole 125a and the second bearing hole 130a is a vertically long hole whose dimension in the up-down direction is longer than that in the front-rear direction. Accordingly, the lower plate body 121 is rotatable up and down about the plate support shaft 126 via the first bearing wall 125, and the upper plate body 124 is rotatable up and down about the plate support shaft 126 via the second bearing wall 130.

That is, the positioning portion includes the plate support shaft 126 extending in a direction intersecting the up-down direction and the first conveying direction Dc1 in which the printing medium W is conveyed between the lower plate Mp1 and the upper plate Mp2. The lower plate Mp1 and the upper plate Mp2 are rotatably supported by the plate support shaft 126. Here, the lower plate Mp1 has a first upstream end and a first downstream end in the first conveying direction Dc1, and the first bearing wall 125 provided at a position closer to the first upstream end than the first downstream end and having the first bearing hole 125a. The upper plate Mp2 has a second upstream end and a second downstream end in the first conveying direction Dc1, and a second bearing wall 130 provided at a position closer to the second upstream end than the second downstream end and having the second bearing hole 130a. The plate support shaft 126 passes through the first bearing hole 125a and the second bearing hole 130a. Accordingly, the lower plate Mp1 and the upper plate Mp2 are rotatable up and down about the plate support shaft 126. Therefore, it is easy for the lower plate Mp1 to smoothly ride on the lower dies 30 and 31, and it is easy for the printing medium W to be smoothly conveyed between the lower plate Mp1 and the upper plate Mp2. Therefore, the printing medium W is positioned with respect to the front surface portion SEb, and the button product can be automatically manufactured.

The lower plate Mp1 is provided with the first bearing hole 125a penetrating the first bearing wall 125 on the right side and the first bearing hole 125a on the left side penetrating the first bearing wall 125 on the left side. The upper plate Mp2 is provided with the second bearing hole 130a penetrating the second bearing wall 130 on the right side and the second bearing hole 130a on the left side penetrating the second bearing wall 130 on the left side. In this way, the lower plate Mp1 is provided with a plurality of first bearing holes 125a, and the upper plate Mp2 is provided with a plurality of second bearing holes 130a. Accordingly, both ends of the lower plate body 121 are supported by the plate support shaft 126 via the first bearing wall 125, and both ends of the upper plate body 124 are supported by the plate support shaft 126 via the second bearing wall 130. Therefore, the printing medium W clamped between the lower plate body 121 and the upper plate body 124 is easily positioned in the up-down direction with respect to the front surface portion SEb. Accordingly, the button product can be automatically produced.

The lower plate body 121 has a guide 122 including a first guide 122a and a second guide 122b disposed at an interval in a direction intersecting the up-down direction and the first conveying direction Dc1 in which the printing medium W is conveyed between the lower plate Mp1 and the upper plate Mp2. The first guide 122a is erected from the right end of the lower plate body 121, and the second guide 122b is erected from the left end of the lower plate body 121. The first guide 122a extends linearly in a left oblique direction toward the rear, and the second guide 122b extends linearly in a right oblique direction toward the rear, such that the interval between the first guide 122a and the second guide 122b decreases toward the rear. Therefore, an interval between a rear end of the first guide 122a and a rear end of the second guide 122b is smaller than an interval between a front end of the first guide 122a and a front end of the second guide 122b. The interval between the rear end of the first guide 122a and the rear end of the second guide 122b is equal to or slightly larger than the dimension of the printing medium W in the left-right direction (i.e., width dimension). The printing medium W is conveyed rearward while being guided between the first guide 122a and the second guide 122b. Therefore, the printing medium W is positioned, by the guide 122, in the left-right direction with respect to the front member SE. Accordingly, the button product can be automatically produced.

As illustrated in the examples of FIGS. 7B and 8, the lower plate body 121 is provided with a circular first notch 123 at a position overlapping the first recess 30c1 of the first lower die 30 when viewed from above. Since the lower plate body 121 is provided to surround the periphery of the first notch 123, the lower plate body 121 can be provided with strength. A diameter dimension of the first notch 123 is equal to or slightly larger than a diameter dimension of the first recess 30c1 of the first lower die 30 and a diameter dimension of the cover portion Wb of the printing medium W. An outer peripheral edge of the first notch 123 coincides with or is disposed outside an outer peripheral edge of the first recess 30c1. Since the first recess 30c1 is provided above a second recess 30c2 that accommodates the front member SE, the cover portion Wb is fed to above the front member SE in the second recess 30c2 via the first notch 123.

The upper plate Mp2 has a second notch 128 that is cut toward the upstream side in the first conveying direction Dc1 in which the printing medium W is conveyed between the lower plate Mp1 and the upper plate Mp2. An outer peripheral edge of the second notch 128 is recessed forward from the rear end of the upper plate Mp2, so that the upper plate Mp2 has a U shape. The second notch 128 is larger than the first notch 123 of the lower plate body 121, and is provided at a position overlapping the first notch 123 when viewed from above. The outer peripheral edge of the second notch 128 coincides with or is disposed outside the outer peripheral edges of the first notch 123 and the first recess 30c1. The notch 128 has, for example, a shape in which a semicircular front portion protruding forward and a rectangular rear portion extending rearward from a linear portion of the front portion and opening at a rear end of the upper plate body 124 are integrally coupled. Such a shape can reduce a material cost of the upper plate body 124.

The entire first recess 30c1 of the first lower die 30 is exposed from the second notch 128 via the first notch 123. The printing medium W passes between the lower plate Mp1 and the upper plate Mp2, and is conveyed onto the front member SE accommodated in the second recess 30c2 below the first recess 30c1. The cover portion Wb of the printing medium W is disposed above the front member SE. Of the remaining portion Wa of the printing medium W, a rear portion of the cover portion Wb is disposed on the lower plate body 121 in a state of being exposed from the second notch 128 of the upper plate Mp2, and the other portion is clamped between the upper plate body 124 and the lower plate body 121.

The pressing unit 6 further includes the pressing motor 60 (FIG. 3), a swing arm 63, a remaining portion depressing head 65, and a pressing head 66, as illustrated in the example of FIG. 9. A rotary shaft of the pressing motor 60 is coupled to a base end of the swing arm 63 via a gear. The remaining portion depressing head 65 and the pressing head 66 are attached to a distal end of the swing arm 63. When the pressing motor 60 is rotationally driven, the remaining portion depressing head 65 and the pressing head 66 press the cover portion Wb of the printing medium W clamped between the lower plate Mp1 and the upper plate Mp2.

Here, the pressing head 66 has a substantially cross shape extending in the front-rear direction and the left-right direction, and dimensions thereof in the front-rear direction and the left-right direction are the same as or slightly smaller than the dimensions of the first notch 123, the first recess 30c1, and the cover portion Wb. Front, left, and right ends of the pressing head 66 protrude downward from a center thereof in the front-rear direction and the left-right direction. Therefore, the pressing head 66 passes through the first notch 123 and the second notch 128 and presses the cover portion Wb of the printing medium W on the front member SE accommodated in the second recess 30c2 below the first recess 30c1 of the first lower die 30. Accordingly, the coupling portion Wc around the cover portion Wb is partially or entirely cut.

The remaining portion depressing head 65 includes a support shaft 65a, a head body 65b, and a spring 65c. The support shaft 65a extends in the front-rear direction, and has a front end connected to the spring 65c and a rear end connected to the head body 65b. The support shaft 65a is pivotably supported by the swing arm 63 between the spring 65c and the head body 65b. The head body 65b extends in the left-right direction, has left and right ends protruding downward, and is biased downward by an elastic force of the spring 65c. Therefore, the head body 65b is disposed in the second notch 128 of the upper plate body 124 and behind the first notch 123 of the lower plate body 121. The head body 65b is exposed from the second notch 128 and presses the remaining portion Wa of the printing medium W on the lower plate body 121 with the linear weak portion Wd clamped.

In this way, a front portion of the remaining portion Wa is clamped between the fifth drive roller Rk5 and the fifth driven roller Ro5 of the conveying unit 2 and conveyed forward in a state where the cover portion Wb is pressed by the pressing head 66 and the remaining portion Wa is pressed by the remaining portion depressing head 65. Accordingly, the coupling portion Wc of the printing medium W is cut, and the remaining portion Wa is separated from the cover portion Wb. The remaining portion Wa is conveyed forward from a position of the pressing head 66 where a vertex of a triangular cut portion 67 pointed rearward faces a front end of the linear weak portion Wd, so that the linear weak portion Wd is cut by the cut portion 67. Here, since the head body 65b presses the remaining portion Wa by the elastic force of the spring 65c, a conveyance force of the conveying unit 2 exceeds the elastic force, and the remaining portion Wa are conveyed forward. At this time, since the left and right remaining portion Wa separated by the linear weak portion Wd passes through the left and right of the pressing head 66 and moves forward while the cover portion Wb of the printing medium W is pressed by the pressing head 66, the remaining portion Wa is conveyed to the collection box 8 without being caught by the pressing head 66.

When the printing medium W is conveyed to above the first lower die 30 of the die unit 3 by the conveying unit 2, the printing medium W may be conveyed until a rear end of the cover portion Wb of the printing medium W is located behind a rear end of the first recess 30c1 of the first lower die 30. Accordingly, since a front end of the cover portion Wb is located behind a front end of the first recess 30c1, when the cover portion Wb is pressed by the pressing head 66, the front end of the cover portion Wb is fitted into the first recess 30c1 and faces a front end 30c3 of an inner surface of the guide wall 30b2 surrounding the periphery of the first recess 30c1. Therefore, when the remaining portion Wa is conveyed forward by the conveying unit 2 in a state where the cover portion Wb is pressed by the pressing head 66, the front end of the cover portion Wb is locked to the front end 30c3 of the inner surface of the guide wall 30b2, and the cover portion Wb is prevented from moving forward together with the remaining portion Wa. Accordingly, the cover portion Wb is disposed above the front member SE accommodated in the second recess 30c2 below the first recess 30c1.

In this way, the die unit 3 includes the first lower die 30 including the guide wall 30b2 surrounding the periphery of the recess 30c in which the cover portion Wb is accommodated. The conveying unit 2 conveys the printing medium W until the upstream end of the cover portion Wb is located downstream of the upstream end of the recess 30c in the first conveying direction Dc1 in which the printing medium W is conveyed. The positioning portion has, as a locking portion that locks the upstream end of the cover portion Wb, the guide wall 30b2 facing the upstream end of the recess 30c when the printing medium W is conveyed, by the conveying unit 2, in the second conveying direction Dc2 opposite to the first conveying direction Dc1. Accordingly, the guide wall 30b2 functions as the positioning portion that positions the cover portion Wb with respect to the front member SE in the front-rear direction. That is, the positioning portion includes the guide wall 30b2. Accordingly, the button product can be automatically produced.

### Die Unit

The die unit 3 includes the first lower die 30 that supports the front member SE, the second lower die 31 that supports the back member BE, a rotation support table 32, the lower die moving motor 140 (FIG. 3), the upper die lifting motor 34 (FIG. 3), and an upper die 33, as illustrated in the example of FIG. 2. The rotation support table 32 is a rotating portion that rotates the first lower die 30 and the second lower die 31 about a second shaft extending in the up-down direction, and has, for example, a substantially circular shape in a plan view. The first lower die 30 and the second lower die 31 are disposed at symmetrical positions with respect to a center of the rotation support table 32 in the rotation support table 32. The rotation support table 32 rotates around an axis thereof in the up-down direction Dz by rotational driving of the lower die moving motor 140. Accordingly, one lower die of the first lower die 30 and the second lower die 31 is located at a second die position P2 facing the upper die 33 in the up-down direction Dz, and the other lower die is located at the first die position P1 located on the opposite side of the second die position P2 across the center of the rotation support table 32 in the front-rear direction Dx. The first die position P1 is clamped between the front member slope 43 of the front member feed unit 4 and the back member slope 53 of the back member feed unit 5. When the first lower die 30 is at the first die position P1, the front member SE is fed from the front member feed unit 4 to the first lower die 30. On the other hand, when the second lower die 31 is at the first die position P1, the back member BE is fed from the back member feed unit 5 to the second lower die 31.

The first lower die 30 includes a columnar first pedestal 30a, a cylindrical first slide die 30b that surrounds a periphery of the first pedestal 30a and slides up and down with respect to the first pedestal 30a, and a first spring 30s that biases the first slide die 30b upward, as illustrated in the example of FIG. 11A. The first slide die 30b has an annular upper surface 30b5 and a cylindrical guide wall 30b2 protruding upward from an outer peripheral edge of the upper surface 30b5. The recess 30c of the first lower die 30 includes a first recess 30c1 in which the cover portions Wb and Fb are accommodated, and a second recess 30c2 in which the front member SE is accommodated. The first recess 30c1 is a space formed by an inner peripheral surface of the guide wall 30b2 and the upper surface 30b5, and the cover portions Wb and Fb are supported by the upper surface 30b5. The second recess 30c2 is a space formed by an inner peripheral surface of the first slide die 30b and an upper surface 30a2 of the first pedestal 30a, and the front member SE is supported by the upper surface 30a2. A diameter of the inner peripheral surface of the guide wall 30b2 is larger than a diameter of the inner peripheral surface of the first slide die 30b, and a center axis of the inner peripheral surface of the guide wall 30b2 and a center axis of the inner peripheral surface of the first slide die 30b are arranged on the same straight line. The first recess 30c1 is disposed above the second recess 30c2.

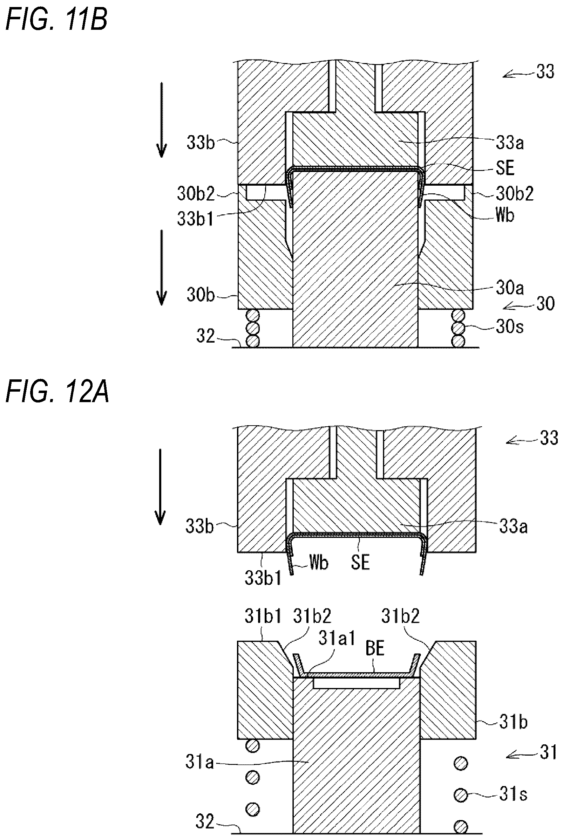

The second lower die 31 includes a columnar second pedestal 31a, a cylindrical second slide die 31b that surrounds a periphery of the second pedestal 31a and slides up and down with respect to the second pedestal 31a, and a second spring 31s that biases the second slide die 31b upward, as illustrated in the example of FIG. 12A. The second slide die 31b has a tapered surface 31b2 which is an inner peripheral surface whose diameter decreases downward. The upper die 33 includes a columnar inner die 33a and a cylindrical outer die 33b surrounding a periphery of the inner die 33a, as illustrated in the examples of FIGS. 11A and 12A. The inner die 33a and the outer die 33b are raised and lowered by the upper die lifting motor 34.

The button product 200 is produced with the die unit 3, as illustrated in the examples of FIGS. 11A to 12B. In FIGS. 11A to 12B, the white film F between the printing medium W and the front surface portion SEb is not illustrated. When the first lower die 30 is at the first die position P1, the front surface portion SEb of the front member SE is disposed on the upper surface 30a2 of the first pedestal 30a of the first lower die 30, as illustrated in FIG. 11A. The peripheral edge portion SEa of the front member SE is inserted between an outer peripheral surface of the first pedestal 30a and the inner peripheral surface of the first slide die 30b. The cover portions Wb and Fb are placed on the upper surface 30b5 of the first slide die 30b in the guide wall 30b2.

The first lower die 30 is moved to the second die position P2 and the second lower die 31 is moved to the first die position P1 by the rotation of the rotation support table 32, as illustrated in FIG. 11B. At the second die position P2, when the upper die 33 is lowered, the lower surface 33b1 of the outer die 33b abuts against the guide wall 30b2 of the first slide die 30b and presses down the first slide die 30b to a predetermined position with respect to the first pedestal 30a against a biasing force of the first spring 30s. Accordingly, a lower surface 33a1 of the inner die 33a crimps the cover portion Wb to the front member SE, the front member SE and the cover portions Wb and Fb are fitted into the outer die 33b, and the first front portion Wf1 and the clamped portion Wg of the cover portion Wb are bent downward. Thereafter, the upper die 33 is raised to separate the front member SE from the first lower die 30, as illustrated in the example of FIG. 12A.

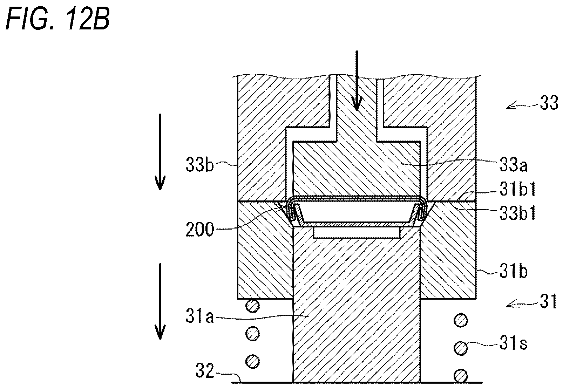

At the first die position P1, the back member BE is disposed on the upper surface 31a1 of the second pedestal 31a of the second lower die 31, and the periphery of the back member BE is surrounded by the tapered surface 31b2 whose diameter decreases downward. The second lower die 31 is moved to the second die position P2 by the rotation of the rotation support table 32, as illustrated in FIG. 12B. Here, when the upper die 33 is lowered, the lower surface 33b1 of the outer die 33b abuts against the upper surface 31b1 of the second slide die 31b, and presses down the second slide die 31b to a predetermined position against a biasing force of the second spring 31s. At this time, the clamped portion Wg of the cover portion Wb comes into contact with the peripheral edge portion BEa of the back member BE and is folded between the back surface of the peripheral edge portion SEa of the front member SE and a front surface of the peripheral edge portion BEa of the back member BE, as illustrated in the example of FIG. 10B. The peripheral edge portion SEa of the front member SE is pressed and deformed by the tapered surface 31b2. In this way, the front member SE and the back member BE are caulked to produce the button product 200.

### Take-Out Unit

After the second lower die 31 holding the button product 200 is moved to the first die position P1 by the rotation of the rotation support table 32, the take-out unit 7 takes out the button product 200 from the second lower die 31 and guides the button product 200 to the button product container 9 disposed in front of the take-out unit 7, as illustrated in the example of FIG. 2. The take-out unit 7 is disposed in front of the front member feed unit 4.

The take-out unit 7 includes a take-out motor 70, a swing arm 71, a magnet member 72, and a seat 73. The swing arm 71 is an elongated member, the magnet member 72 such as a permanent magnet is provided at a distal end of the swing arm 71, and a rotary shaft of the take-out motor 70 is connected to a base end of the swing arm 71 via a gear. The swing arm 71 pivots in a direction approaching the second lower die 31 by the driving of the take-out motor 70, and attaches the magnet member 72 onto the button product 200 held by the second lower die 31. On the other hand, the swing arm 71 pivots in a direction away from the second lower die 31 by the driving of the take-out motor 70, and moves the button product 200 attached to the magnet member 72 to the seat 73. The seat 73 extends while being inclined obliquely downward toward the button product container 9. The button product 200 is detached from the magnet member 72 at the seat 73, slides toward the button product container 9, and is stored in the button product container 9.

### Flow of Overall Processing

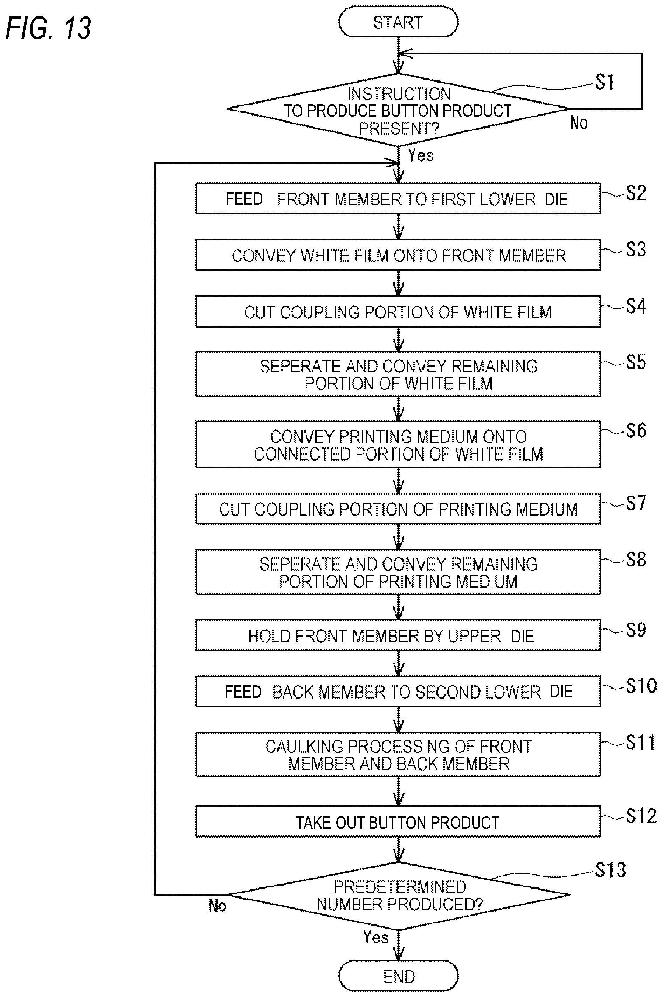

As illustrated in the example of FIG. 13, first, the control device 110 determines whether there is an instruction to produce a button product from a user (step S1). When there is no instruction to produce a button product (No in step S1), the control device 110 waits as it is. On the other hand, when there is an instruction to produce a button product (Yes in step S1), the control device 110 causes the front member feed unit 4 to feed the front member SE to the first lower die 30 (step S2).

Next, the control device 110 causes the conveying unit 2 to convey the white film F onto the front member SE (step S3). Next, the control device 110 causes the pressing unit 6 to cut the coupling portion Fc of the white film F (step S4). Then, the control device 110 causes the conveying unit 2 to separate the remaining portion Fa of the white film F from the cover portion Fb and to convey the separated remaining portion Fa to the collection box 8 (step S5).

Subsequently, the control device 110 causes the conveying unit 2 to convey the printing medium W printed by the printing unit 1 onto the cover portion Fb of the white film F (step S6). Next, the control device 110 causes the pressing unit 6 to cut the coupling portion Wc of the printing medium W (step S7). Then, the control device 110 causes the conveying unit 2 to separate the remaining portion Wa of the printing medium W from the cover portion Wb and to convey the separated remaining portion Wa to the collection box 8 (step S8).

Next, the control device 110 moves the first lower die 30 from the first die position P1 to the second die position P2 below the upper die 33 in the die unit 3, and then causes the upper die 33 to hold the front member SE and the cover portions Wb and Fb which are held by the first lower die 30 (step S9). Further, the control device 110 causes the back member feed unit 5 to feed the back member BE to the second lower die 31 (step S10). Then, the control device 110 moves the second lower die 31 to the second die position P2 below the upper die 33 in a state where the front member SE and the cover portions Wb and Fb are held, and then lowers the upper die 33 to perform caulking processing (step S11). Accordingly, the button product 200 is produced. Thereafter, the control device 110 moves, to the first die position P1, the second lower die 31 in a state where the button product 200 is held, causes the take-out unit 7 to take out the button product 200 (step S12), and places the button product 200 into the button product container 9.

After taking out of the button product 200 by the take-out unit 7 is finished, the control device 110 moves the first lower die 30 at the second die position P2 to the first die position P1. Thereafter, the control device 110 determines whether a predetermined number of button products 200 is produced (step S13). When the predetermined number of button products 200 is not produced (No in step S13), the control device 110 returns to the processing of step S2 and repeats the subsequent processing. On the other hand, when the predetermined number of button products 200 is produced (Yes in step S13), the control device 110 ends the button product production processing.

### Modification

The present invention is not limited to the above-described embodiment, and modifications can be adopted without departing from the gist of the present invention. For example, it is as follows.

The shape of the first notch 123 in the lower plate Mp1 is not limited to the above-described shape, and may be, for example, a shape in which a semicircular rear portion protruding rearward and a rectangular front portion extending forward from the rear portion and opening at the front end of the lower plate body 121 are integrally coupled. In this way, the lower plate body 121 has a U shape due to the first notch 123 cut rearward from the front end of the lower plate body 121. Since the shape of the first notch 123 at the outer peripheral edge recessed rearward from the front end of the lower plate body 121 is larger than a circular shape, the material cost of the lower plate Mp1 can be reduced. The number of the first notch 123 is not limited to one, and a plurality of first notches 123 may be provided.

The shape of the second notch 128 in the upper plate Mp2 is not limited to the above-described shape, and may be, for example, a circular shape. In this case, the upper plate body 124 surrounds the periphery of the second notch 128, and thus can have higher strength than the second notch 128 having a shape of which the rear end is opened. The number of the second notch 128 is not limited to one, and a plurality of second notches 128 may be provided.

In the above-described configuration, the positioning portion is provided in the pressing unit 6, but the arrangement of the positioning portion is not limited thereto as long as the printing medium W can be positioned with respect to a button product such as the front member SE. For example, the positioning portion may be provided in the printing unit 1 or the conveying unit 2. For example, an adhesive layer made of ink is formed on the printing medium W by attaching ink from the printing unit 1 to the printing medium W. The adhesive layer comes into contact with the button product at the determined position, so that the printing medium W can be adhered to the button product.

In the above-described configuration, the first bearing hole 125a and the second bearing hole 130a are vertically long holes that are long in the up-down direction, but the present invention is not limited thereto. The first bearing hole 125a and the second bearing hole 130a may have an elliptical shape or a rectangular shape as long as the lower plate body 121 is rotatable up and down about the plate support shaft 126 via the first bearing wall 125.

### Reference Signs List

1: printing unit
2: conveying unit
6: pressing unit
30: lower die
30: first lower die
30b2: guide wall
30c: recess
31: second lower die
32: rotation support table (rotating portion)
65a: support shaft
100: button product manufacturing device
122: guide
122a: first guide
122b: second guide
123: first notch
125: first bearing wall
125a: first bearing hole
126: plate support shaft
127: push-up portion
128: second notch
130: second bearing wall
130a: second bearing hole
200: button product

## Claims

1. A button product manufacturing device configured to manufacture a button product, comprising:
a printing unit configured to perform printing on a printing medium;
a conveying unit configured to convey the printing medium to above the button product; and
a positioning portion configured to position the printing medium with respect to the button product.

2. The button product manufacturing device according to claim **1,** wherein
the positioning portion includes
a lower plate configured to support the printing medium, and
an upper plate configured to contact with the printing medium.

3. The button product manufacturing device according to claim 2, wherein
the positioning portion includes a plate support shaft extending in a direction intersecting with an up-down direction and a conveying direction in which the printing medium is conveyed between the lower plate and the upper plate, and
the lower plate and the upper plate are rotatably supported by the plate support shaft.

4. The button product manufacturing device according to claim 3, wherein
the lower plate includes
a first upstream end and a first downstream end in the conveying direction, and
a first bearing wall provided at a position closer to the first upstream end than the first downstream end and having a first bearing hole,
the upper plate includes
a second upstream end and a second downstream end in the conveying direction, and
a second bearing wall provided at a position closer to the second upstream end than the second downstream end and having a second bearing hole, and
the plate support shaft passes through the first bearing hole and the second bearing hole.

5. The button product manufacturing device according to claim 4, wherein
a plurality of the first bearing holes are provided, and
a plurality of the second bearing holes are also provided.

6. The button product manufacturing device according to claim 2,
the button product including a front member and a back member, and
the button product manufacturing device further comprising:
a pressing unit configured to press the printing medium against the front member.

7. The button product manufacturing device according to claim 6, wherein
the pressing unit includes the positioning portion configured to position the printing medium with respect to the front member.

8. The button product manufacturing device according to claim 6, wherein
the pressing unit includes a first lower die configured to support the front member, and
the lower plate and the upper plate are disposed above the first lower die.

9. The button product manufacturing device according to claim 7, wherein
the printing medium includes a cover portion configured to cover the front member, and
the lower plate has a first notch larger than the cover portion.

10. The button product manufacturing device according to claim 6, wherein
the pressing unit includes
a first lower die configured to support the front member,
a second lower die configured to support the back member, and
a rotating portion configured to rotate the first lower die and the second lower die about a second shaft extending in the up-down direction, and
the lower plate includes a push-up portion configured to be pushed up by the first lower die or the second lower die when the first lower die and the second lower die are rotated.

11. The button product manufacturing device according to claim 2, wherein
the lower plate includes a guide including a first guide and a second guide disposed at an interval in a direction intersecting with an up-down direction and a conveying direction in which the printing medium is to be conveyed between the lower plate and the upper plate, and
the interval at a downstream end of the guide in the conveying direction is narrower than the interval at an upstream end of the guide in the conveying direction.

12. The button product manufacturing device according to claim 2, wherein
the upper plate has a second notch cut toward an upstream side in a conveying direction in which the printing medium is to be conveyed between the lower plate and the upper plate.

13. The button product manufacturing device according to claim 11, wherein
the upper plate has a U shape.

14. The button product manufacturing device according to claim 6, wherein
the printing medium includes a cover portion configured to cover the front member,
the pressing unit includes a first lower die including a guide wall surrounding a periphery of a recess in which the cover portion is to be accommodated, and
the conveying unit is configured to convey the printing medium until an upstream end of the cover portion is located downstream of an upstream end of the recess in a conveying direction in which the printing medium is to be conveyed.

15. The button product manufacturing device according to claim 14, wherein
the positioning portion includes the guide wall facing the upstream end of the recess.
